# EUROPEAN PATENT APPLICATION

(11) **EP 3 418 845 A1**
(43) Date of publication of application: **26.12.2018**
(21) Application number: 17753126.6
(22) Date of filing: 13.02.2017
(51) Int. Cl.: G05D 1/02, B62D 6/00, E01F 11/00, G08G 1/00, B62D 137/00

(54) **WORK VEHICLE SYSTEM AND MAGNETIC MARKER WORK METHOD**

(30) Priority: 16.02.2016 JP 2016027194
(71) Applicant: Aichi Steel Corporation, Tokai-shi, Aichi 476-8666 (JP)
(72) Inventor: YAMAMOTO, Michiharu, Tokai-shi, Aichi 476-8666 (JP); NAGAO, Tomohiko, Tokai-shi, Aichi 476-8666 (JP); AOYAMA, Hitoshi, Tokai-shi, Aichi 476-8666 (JP)
(74) Representative: Viering, Jentschura & Partner mbB Patent- und Rechtsanwälte
(86) International application number: PCT/JP2017/005136
(87) International publication number: WO 2017/141869

(57) **Abstract**

Provided are a work vehicle system and work method that can efficiently perform work relating to magnetic markers.

A work vehicle system (4S) configured of a plurality of work vehicles (4A to 4D) performing work relating to magnetic markers to be laid on a road surface so as to be detectable by a magnetic sensor attached to a bottom surface side of a vehicle in order to achieve vehicle-side control for assisting driving operation of the vehicle by a driver or automatic driving not relying on operation of the driver includes a target acquisition apparatus (481) which acquires a control target for travelling along a laying line where the magnetic markers (1) are to be laid, an automatic steering apparatus (485) for achieving automatic steering by controlling a steering angle of a steering wheel based on the control target, and a work apparatus which takes charge of the work relating to the magnetic markers (1).

## Description

### TECHNICAL FIELD

The present invention relates to work vehicle systems and work methods using the same which can contribute to work efficiency when magnetic markers are to be laid on a road.

### BACKGROUND ART

Conventionally, a magnetic marker detection system for vehicles which detects a magnetic marker laid on a road by a magnetic sensor attached to a vehicle has been known (for example, refer to Patent Literature 1) . According to this magnetic marker detection system, for example, there is a possibility that various driving assists using magnetic markers laid along a lane, such as automatic steering control and lane departure warning as well as automatic driving can be achieved.

### CITATION LIST

### Patent Literature

Patent Literature 1: Japanese Unexamined Patent Application Publication No. 2005-202478

### SUMMARY OF INVENTION

### Technical Problem

However, the above conventional magnetic marker has a problem as follows. For example, to achieve driving assist of lane departure warning, many magnetic markers are required to be laid at relatively short spacing. Thus, if work efficiency is insufficient when each of the magnetic markers is to be laid or when maintenance work is performed on the laid magnetic markers, an increase in installation cost may not be avoidable.

The present invention was made in view of the above-described conventional problem to provide a work vehicle system and work method which can efficiently perform work relating to magnetic markers.

### SOLUTION TO PROBLEM

One aspect of the present invention is directed to a a work vehicle system configured of one or plurality of work vehicles performing work relating to magnetic markers to be laid on a road surface so as to be detectable by a magnetic sensor attached to a bottom surface side of a vehicle in order to achieve vehicle-side control for assisting driving operation of the vehicle by a driver or automatic driving not relying on operation of the driver, comprising:
a target acquisition apparatus which acquires a control target for travelling along a laying line, which is a virtual line where the magnetic markers are to be laid in a line or a virtual line where the magnetic markers have been laid in a line;
a unit for achieving control of a steering angle of a steering wheel based on the control target; and
a work apparatus which takes charge of the work relating to the magnetic markers.

One aspect of the present invention is directed to a magnetic marker work method of performing, by a plurality of work vehicles, work relating to the magnetic markers, wherein
to a leading work vehicle including a target acquisition apparatus which acquires a control target for travelling along a laying line, which is a virtual line where the magnetic markers are laid in a line or a virtual line where the magnetic markers have been laid in a line, and a unit for achieving control of a steering angle of a steering wheel based on the control target,
a subsequent work vehicle including a following travelling apparatus for travelling to follow a preceding work vehicle and a work apparatus which takes charge of the work relating to the magnetic markers is combined to configure the plurality of work vehicles, and the work relating to the magnetic markers are performed by platooning of the plurality of work vehicles, and
from among the work vehicles of a plurality of types with different types of the work apparatuses, the subsequent work vehicle is selected in accordance with work details to be performed.

### Advantageous Effects of Invention

In the work vehicle system of the present invention, one or plurality of work vehicles travel along the laying line. If the work vehicles perform the work relating to the magnetic markers while travelling along the laying line, the work relating to the magnetic markers can be efficiently performed.

The work method of the present invention is a method of laying or maintaining the magnetic markers by combining the plurality of work vehicles. In this work method, work such as laying and maintenance of the magnetic markers is performed by platooning in which a work vehicle travelling along the laying line takes the lead and a work vehicle (s) having equipped with the work apparatus in charge of the work relating to the magnetic markers follows.

In this work method, platooning is performed by combining the work vehicle (s) selected in accordance with details of the work to be performed with the leading work vehicle, thereby allowing the work relating to the magnetic markers to be efficiently performed. Furthermore, if the work vehicle(s) with which the leading work vehicle is to be combined is switched, various types of work relating to the magnetic markers can be performed with high versatility.

As described above, according to the work vehicle system and the magnetic marker work method of the present invention, work relating to magnetic markers can be efficiently performed to improve work efficiency.

### BRIEF DESCRIPTION OF DRAWINGS

FIG. 1 is a descriptive diagram exemplarily depicting a state of detecting a magnetic marker by a magnetic sensor of a vehicle.
FIG. 2 is a descriptive diagram exemplarily depicting a lane where magnetic markers are laid.
FIG. 3 depicts an upper view and a side view of the magnetic marker.
FIG. 4 is a sectional view depicting a sectional structure of the magnetic marker.
FIG. 5 is a graph depicting a magnetic field distribution of the magnetic marker in a vertical direction.
FIG. 6 is a descriptive diagram depicting a process of fabricating magnetic markers.
FIG. 7 is a descriptive diagram depicting a work vehicle system.
FIG. 8 is a flowchart diagram depicting a procedure of installing the magnetic marker.
FIG. 9 is a descriptive diagram of work by the work vehicle system.

### DESCRIPTION OF EMBODIMENTS

A suitable aspect of the present invention is described.

As the work relating to magnetic markers, there are various types of work, such as laying; and check, magnetization, cleaning, and taking-out of laid magnetic markers.

Note that the timing of performing the above-described work relating to the magnetic markers may be a timing of detecting that the work vehicle has reached a position to work. In this case, the work vehicle can automatically or semi-automatically perform the work, and the load on a worker or the like can be further reduced. On the other hand, the present invention may be configured so that the worker or the like confirms that the work vehicle has reached to the position to work and starts the work in accordance with the operation of confirmation. In this case, the worker or the like takes charge of confirmation of the position, thereby allowing improvement in reliability of the work.

It is preferable that as a unit for achieving control of the steering angle of the steering wheel, an automatic steering apparatus is provided to achieve automatic steering by controlling the steering angle of the steering wheel based on the control target.

In this case, automatic steering can achieve a saving in work.

Note that the unit for achieving control of the steering angle of the steering wheel may be an apparatus which presents the control target to a driver or the like. For example, if an apparatus which displays the control target on a screen is adopted, with the driver of the work vehicle operating the steering wheel as confirming the control target, travelling of the work vehicle along the laying line can be achieved.

It is preferable that a speed control apparatus which controls a travelling speed including driveaway and stop is provided.

In this case, speed control can be made, more saving can be achieved, and work efficiency can be improved. Note that a configuration may be adopted in which an operator adjusts the travelling speed while the automatic steering apparatus is provided. With the work vehicle including the automatic steering apparatus, accuracy in travelling along the laying line can be improved, compared with the case in which the operator drives, thereby allowing work accuracy to be enhanced.

It is preferable that a laying position detection apparatus for detecting whether the work vehicle has reached a laying position, which is a position where the magnetic marker is planned to be laid or a position where the magnetic marker has been laid is provided and the work apparatus performs the work relating the magnetic markers when it is detected by the laying position detection apparatus that the work vehicle has reached the laying position.

In this case, the work relating to the magnetic markers can be automatically performed every time the work vehicle has reached the laying position. The necessity of operation by manpower every time the work vehicle has reached the laying position can be decreased, and work efficiency can be improved.

It is preferable that the target acquisition apparatus includes a measuring unit which receives radio waves transmitted from a plurality of satellites and measures an absolute position of the work vehicle and a storage unit which stores an absolute position of the laying line, and generates and acquires the control target by comparing the absolute position of the work vehicle and the absolute position of the laying line.

In this case, a relative position of the laying line with reference to the work vehicle can be computed or the like and, based on this relative position, the control target can be generated.

It is preferable that the target acquisition apparatus recognizes a lane, which is a section on a road where the vehicle travels, and thereby measures a relative position of the laying line extending along the lane and, based on the relative position, generates and acquires the control target.

Methods of recognizing the lane include, for example, a method of recognizing the lane by detecting a lane mark such as a white line for dividing the lane by a radar apparatus using light or radio waves and a method of recognizing the lane by detecting the lane mark such as a white line in an image of a forward road taken and acquired by a camera.

It is preferable that in the work vehicle system performing the work relating to the magnetic markers with a plurality of work vehicles travelling in a line, wherein a leading work vehicle includes the target acquisition apparatus, and
a subsequent work vehicle includes a following travelling apparatus which travels to follow a preceding work vehicle and a work apparatus which takes charge of a different work for each of the work vehicles.

In this case, platooning of the plurality of work vehicles allows the work relating to the magnetic markers to be efficiently performed. Replacement of the work vehicles can support different works, and versatility is enhanced.

### Embodiments

### (First Embodiment)

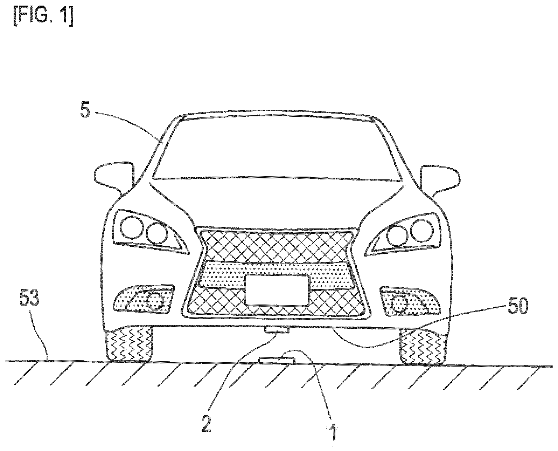

The present example is an example regarding a magnetic marker 1 to be laid on a road for the purpose of assist in vehicle's driving operation, automatic driving, information provision, and so forth. Details of this are described with reference to FIG. 1 to FIG. 9.

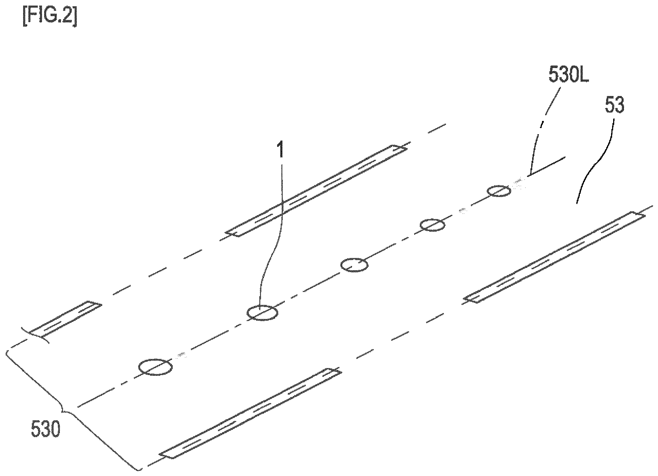

The magnetic markers 1 of FIG. 1 and FIG. 2 are laid, for example, in a line along a laying line 530L, which is a virtual line along the center of a lane 530 where a vehicle 5 runs. The magnetic markers 1 laid on a road surface 53 in this manner can be detected by, for example, a magnetic sensor 2 or the like attached to a bottom surface 50 of the vehicle 5. A detection signal of the magnetic marker 1 by the magnetic sensor 2 is inputted to, for example, an ECU not depicted or the like on a vehicle 5 side, and can be used in various types of control on the vehicle side, such as automatic steering control to keep the lane, driving support control such as lane departure warning, and automatic travelling control.

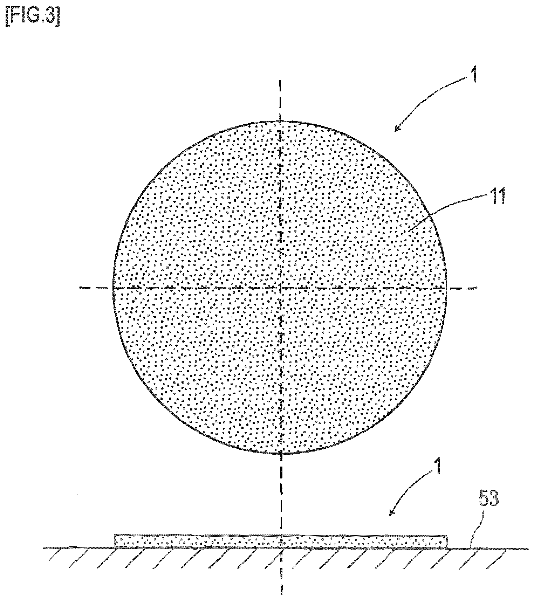

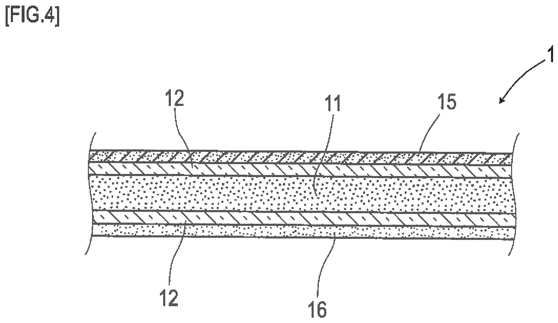

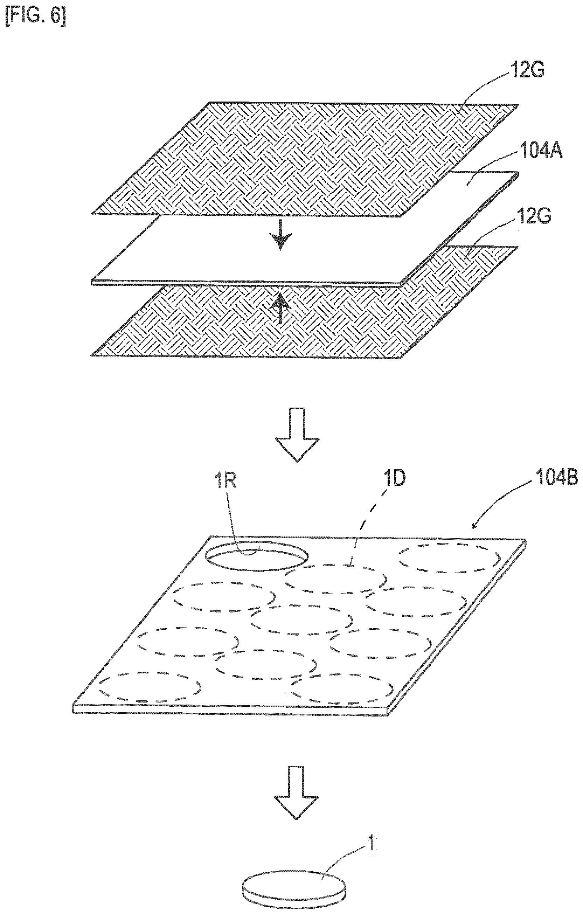

The magnetic marker 1 is, as depicted in FIG. 3 and FIG. 4, a marker in a flat circular sheet shape having a diameter of 100 mm and a thickness of 2. 5 mm. In this magnetic marker 1, a protective layer 12 including a glass cloth 12G (FIG. 6), which is a fiber sheet of glass fiber, is laminated on both front and back surfaces of a magnetic layer 11 which generates magnetism. Furthermore, outside each protective layer 12, a layer mainly made of asphalt, which is a material for pavement, is laminated, and the magnetic marker 1 thus has a five-layer structure.

The magnetic layer 11 is a layer made of an isotropic magnet having a maximum energy product (BHmax)=6.4 kJ/m³. This magnetic layer 11 is formed by dispersing magnetic powder , which is powder of iron oxide, in asphalt as a base material.

The protective layer 12 is a layer of a composite material (fiber-reinforced composite material) acquired by impregnating the glass cloth 12G with asphalt as a parent material (matrix).

Of layers outside the protective layers 12, a layer which faces the road surface 53 at the time of installation is a joint layer 16 made of asphalt. Asphalt forming this joint layer 16 functions as a bonding material when jointed to the road surface 53.

Of the layers outside the protective layers 12, a layer opposite to the joint layer 16 is a nonskid layer 15 with an aggregate such as sand mixed into asphalt.

The magnetic marker 1 is bonded to the road surface 53 with asphalt forming the joint layer 16 as a bonding material (FIG. 4). The thickness of the magnetic marker 1, that is, 2.5 mm, is as much as the thickness of a road surface marking such as a white line, speed limit display, and so forth printed on the road surface 53. Also, the nonskid layer 15 on the surface side is formed of asphalt, as with the surrounding road surface 53, and also includes the aggregate for a nonskid purpose. For this reason, the possibility that the driver feels uncomfortable when the vehicle's tires step on the magnetic marker 1 is low, and the possibility of occurrence of slipping and so forth is low.

Here, specifications of the magnetic marker 1 to be fabricated are partially depicted in Table 1.

**[Table 1]**

| Magnet type | Ferrite magnet |
|---|---|
| Outer diameter | *φ* 100mm |
| Thickness | 1.0mm (thickness of only the magnetic layer) |
| Magnetic flux density Gs of the surface | 1mT |

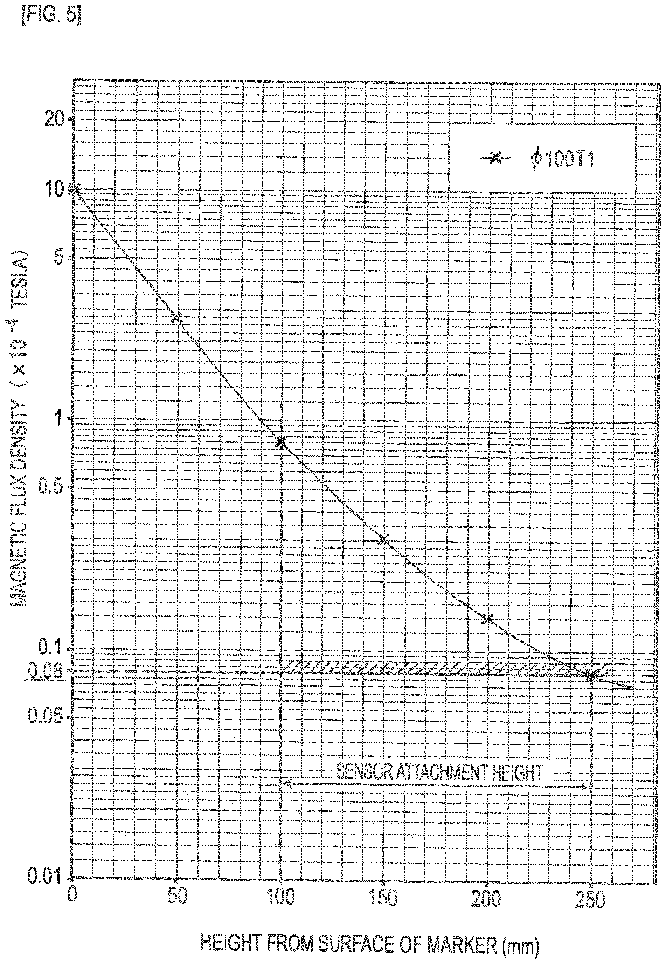

According to a computer simulation performed by the axisymmetric three-dimensional magneto-static analysis using the finite-element method, a magnetic field distribution in a vertical direction of the magnetic marker 1 having a magnetic flux density Gs of the surface of 1 mT and a diameter of 100 mm is found as in FIG. 5. The drawing is a semilogarithmic graph in which a logarithmic scale of the magnetic flux density of magnetism acting in the vertical direction is set on the vertical axis and the height in the vertical direction with reference to the surface of the magnetic marker 1 (height from the surface of the marker) is set on the horizontal axis. According to the drawing, at a position of 250 mm corresponding to an upper limit of 100 mm to 250 mm, which is an assumed range of the attachment height of the magnetic sensor 2 on the vehicle 5 side, the magnetic flux density at which the magnetic marker 1 acts can be grasped as 8 micro tesla (0.08×10⁻⁴ tesla) . Note that the accuracy of the used computer simulation has been confirmed in advance by the inventors through a substantive experiment.

For example, if a highly-sensitive magneto-impedance (MI) sensor having a measurement range of the magnetic flux density of ±0.6 milli tesla and a magnetic flux resolution within the measurement range of 0.02 micro tesla is adopted, the magnetic field of 8 micro tesla at which the magnetic marker 1 acts can be detected with high reliability.

The magneto-impedance (MI) sensor is a magnetic sensor using a magneto-impedance element including a magneto-sensitive body with its impedance changing in accordance with an external magnetic field. The magneto-impedance element (MI element) is an element which detects magnetism by using the magneto-impedance effect (MI effect), in which the depth (thickness) of the skin layer is fluctuated by the external magnetic field due to the skin effect, in which the current density of the skin layer increases when a pulse current, high-frequency current, or the like flows through the magneto-sensitive body, causing the impedance of the magneto-sensitive body to change in a sensitive manner. According to the MI element using this MI effect, highly-sensitive magnetic measurements can be performed. The use of the MI element can achieve a low-cost, small-sized magnetic sensor capable of detecting feeble magnetism on the order of, for example, 0.5 µT to 10 µT. Note that as for the MI sensor using the MI element, many applications have been filed and detailed descriptions are in, for example, International Publication No. WO2005/19851, International Publication No. WO2009/119081, and Japanese Patent No. 4655247,

Next, the method of fabricating the magnetic marker 1 is described. In the present example, as depicted in FIG. 6, after a magnetic sheet 104A forming the magnetic layer 11 is formed, an intermediate sheet 104B for punching with a layer forming the protective layer 12 and so forth laminated on both front and back surfaces is acquired as an intermediate work. Then, by punching process targeted at this intermediate sheet 104B, the magnetic markers 1 before magnetization are fabricated.

The magnetic sheet 104A is a sheet acquired by thinly extending, in a sheet shape, slurry with the magnetic powder (in the present example, powder of iron oxide) blended in asphalt in a molten state as a base material and drying the slurry. This magnetic sheet 104A forms a first layer serving as the magnetic layer 11 (refer to FIG. 4) of the magnetic marker 1.

To the magnetic sheet 104A (FIG. 6) where the glass cloth (woven fabric of glass fiber) 12G is placed so as to cover the surface, a molten material mainly made of asphalt is applied to impregnate the glass cloth 12G with asphalt. With this, a composite material with asphalt, which is a parent material (matrix), reinforced by the glass cloth 12G is formed, and a second layer made of the composite material serving as the above-described protective layer 12 (FIG. 4) can be formed.

The above-described molten material exceeding an amount which allows the glass cloth 12G to be impregnated with asphalt is further supplied. Then, a layer mainly made of asphalt can be formed outside the above-described second layer made of the composite material. This layer is a layer which serves as the above-described nonskid layer 15 or joint layer 16. While the components of the molten material applied to a side where a layer serving as the joint layer 16 is to be formed are asphalt almost entirely, the molten material applied to the side serving as the nonskid layer 15 is a material with an aggregate such as sand mixed into asphalt.

With the above-described procedure, the intermediate sheet 104B having a five-layer structure (refer to FIG. 4) similar to that of the above-described magnetic marker 1 can be prepared. This intermediate sheet 104B is a large-format sheet where the plurality of magnetic markers 1 can be punched out, as depicted by a solid-line circle 1R indicating a punched position and broken-line circles 1D indicating positions planned to be punched out.

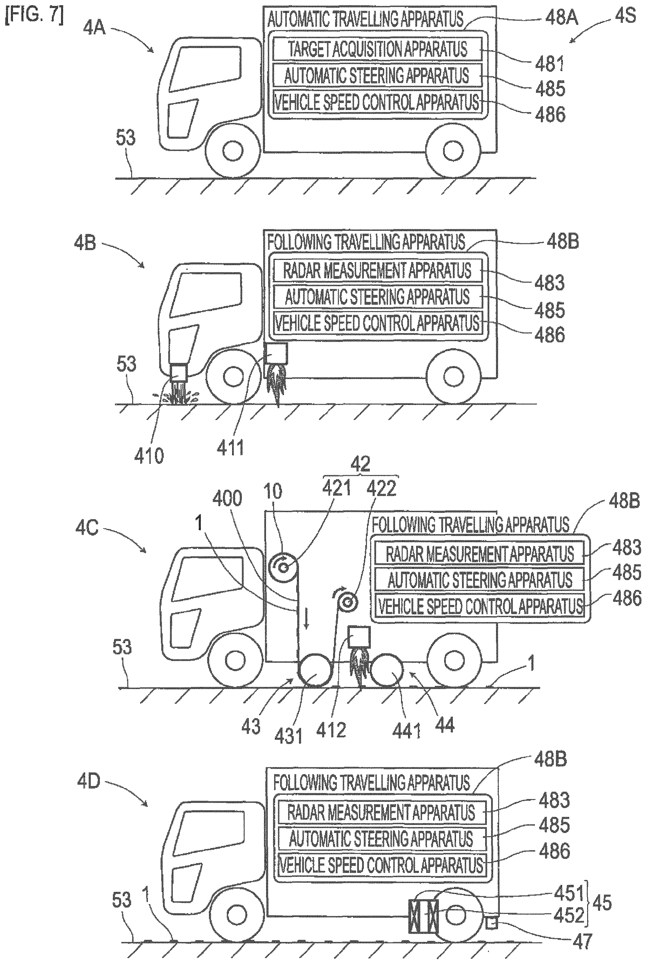

For storage, transportation, and so forth of the magnetic markers 1, for example, it is convenient to have the magnetic markers 1 retained by a roll body 10 (refer to FIG. 7). The roll body 10 is acquired by winding, in a roll shape, a polyethylene-made carrier sheet 400 in a long band shape where the magnetic markers 1 are placed at constant spacings. Note that in the roll body 10, the magnetic markers 1 are retained in a state in which the nonskid layer 15 is positioned on a carrier sheet 400 side and the joint layer 16 is positioned on the opposite side.

Next, a work vehicle system 4S which performs work for laying the magnetic markers 1 on the road is described.

The work vehicle system 4S of FIG. 7 is configured of four work vehicles 4A to 4D. While each of the work vehicles 4A to 4D includes an automatic steering apparatus 485, a vehicle speed control apparatus (speed control apparatus) 486 for a whole speed range, a GPS positioning unit (positioning unit), and so forth, it includes a different work apparatus in accordance with work details in charge and its role.

### (Leading Work Vehicle)

The leading work vehicle 4A includes a target acquisition apparatus 481 which acquires a control target for travelling by following a laying line 530L, the automatic steering apparatus 485, and the vehicle speed control apparatus 486. In the leading work vehicle 4A, a combination of the target acquisition apparatus 481, the automatic steering apparatus 485, and the vehicle speed control apparatus 486 configures an automatic travelling apparatus 48A. Here, the laying line 530L is a virtual line where the magnetic markers 1 are to be laid in a line along the lane 530 (refer to FIG. 2) .

The target acquisition apparatus 481 includes a GPS positioning unit (positioning unit) and also includes storage means (storage unit) for storing an absolute position of the laying line 530L (FIG. 2). The target acquisition apparatus 481 calculates a positional deviation (relative position) between the absolute position of the work vehicle 4A measured by the GPS measurement unit and the absolute position of the laying line 530L and, based on this deviation, generates and acquires a control target.

Note that measurement of the absolute position is preferably measurement by DGPS (Differencial Global Positioning System) . According to DGPS, accuracy in measurement can be improved. The absolute position of the laying line 530L may be discrete data formed of absolute positions of the respective laying positions where the magnetic markers 1 are planned to be laid, or data including an absolute position of an intermediate position between adjacent laying positions. Furthermore, the absolute position may be successive data in which the laying line 530L is represented by a function or the like.

The automatic travelling apparatus 48A is an apparatus which controls the steering angle of the steering wheel, an engine throttle, and so forth so as to be able to travel at a constant speed along the laying line 530L where the magnetic markers 1 are to be laid. The automatic travelling apparatus 48A computes a steering angle target value of the steering wheel, which is one of the above-described control target, and drives a steering actuator (omitted in the drawing) configuring the automatic steering apparatus 485. Also, the automatic travelling apparatus 48A controls the engine throttle (omitted in the drawing) and so forth configuring the vehicle speed control apparatus 486 so as to be able to travel at a speed set in advance.

### (Second Work Vehicle)

The second work vehicle 4B is a work vehicle which cleans the road surface 53 where the magnetic markers 1 are to be laid, and so forth. This work vehicle 4B includes, in addition to a following travelling apparatus 48B for travelling by following the leading work vehicle 4A, a cleaning apparatus 410 which cleans the road surface 53 where the magnetic markers 1 are to be laid and a heating apparatus 411 which heats the road surface 53.

The cleaning apparatus 410 is an apparatus including an injection nozzle which injects a high-pressure water stream toward the road surface 53.

The heating apparatus 411 is an apparatus including a burner which throws flames, and is provided with a flame throw port so as to face the road surface 53. The heating apparatus 411 heats, in advance, the road surface 53 before placement so that the magnetic marker 1 placed by the subsequent work vehicle 4C fully makes contact with the road surface 63.

The following travelling apparatus 48B is an apparatus configured of a combination of a radar measurement apparatus 483, the automatic steering apparatus 485, and the vehicle speed control apparatus 486.

The radar measurement apparatus 483 is an apparatus which measures a distance and azimuth by measuring a delay time after a radio wave of a millimeter waveband is transmitted until the radio wave returned by reflection is received. The radar measurement apparatus 483 can scan a two-dimensional region ahead by changing a direction of transmitting a radio wave. From a two-dimensional distribution of radio field intensities returned by reflection, the radar measurement apparatus 483 detects the preceding vehicle (preceding work vehicle), and specifies the position of the preceding vehicle in the coordinate space with the own vehicle as an origin.

The following travelling apparatus 48B computes a steering angle of the steering wheel for following the preceding vehicle, and drives the steering actuator of the automatic steering apparatus 485. Also, the following travelling apparatus 48B controls the engine throttle (omitted in the drawing) and so forth configuring the vehicle speed control apparatus 486 so as to be able to travel at a speed set in advance.

Note that each of the work vehicles 4B to 4D subsequent to the leading work vehicle 4A includes the GPS measurement unit, and the laying position (absolute positions) of each magnetic marker 1 is stored in advance. Each of the subsequent work vehicles 4B to 4D performs work in charge when reaching the laying position of the magnetic marker 1. In the subsequent work vehicles 4B to 4D, a laying position detection apparatus for detecting whether the work vehicle has reached the laying position, which is a position where the magnetic marker 1 is planned to be laid or a position where the magnetic marker has been laid, is configured by a combination of the GPS measurement unit and storage means for storing the laying position.

### (Third Work Vehicle)

The third work vehicle 4C is a work vehicle which places the magnetic markers 1 on the road surface 53. This work vehicle 4C includes, in addition to the following travelling apparatus 48B of the same specifications as those of the second work vehicle 4B, a supply apparatus 42 which supplies the magnetic markers 1, a placing apparatus 43 which places the magnetic markers 1 supplied from the supply apparatus 42 on the road surface 53, a heating apparatus 412 which heats the road surface 53, and pressurizing apparatus 44 which pressurizes the road surface 53.

The supply apparatus 42 is an apparatus which supplies the magnetic markers 1 retained on the carrier sheet 400 to the placing apparatus 43. The supply apparatus 42 handles the above-described roll body 10 and allows the carrier sheet 400 to be rolled out to take out the magnetic marker 1. The supply apparatus 42 includes a roll-out shaft 421 for setting the roll body 10 and a roll-up shaft 422 which rolls up the carrier sheet 400 rolled out from the roll body 10. The carrier sheet 400 rolled out from the roll body 10 and before being rolled up to the roll-up shaft 422 is wound around the outer periphery of a pressure roller 431 configuring the placing apparatus 43, in a state in which the retained magnetic markers 1 are on the outside.

The placing apparatus 43 is an apparatus which places the magnetic markers 1 on the road surface 53. The placing apparatus 43 includes the pressure roller 431 which rolls, with the carrier sheet 400 wound therearound, while pressurizing the road surface 53. By pressing the carrier sheet 400 onto the road surface 53 while rolling over the road surface 53, the pressure roller 431 transfers the magnetic markers 1 retained on the carrier sheet 400 to the road surface 53.

The heating apparatus 412 is an apparatus including a burner which throws flames, and is provided with a flame throw port so as to face the road surface 53. The heating apparatus 412 heats the road surface 53 with the magnetic markers 1 placed thereon.

The pressurizing apparatus 44 is an apparatus including a pressure roller 441 which pressurizes while rolling over the road surface 53 and levels off the road surface 53 by the weight of this pressure roller 441. The pressurizing apparatus 44 is placed on a rear side behind the heating apparatus 412 so as to level off the road surface 53 after the magnetic marker 1 is heated.

### (Fourth Work Vehicle)

The fourth work vehicle 4D includes, in addition to the following travelling apparatus 48B of the same specifications as those of the second and third work vehicles 4B and 4C, a magnetizing apparatus 45 which magnetizes the laid magnetic marker 1 and a detecting apparatus 47 which detects magnetism of the magnetic marker 1.

The magnetizing apparatus 45 is an apparatus which magnetizes the magnetic marker 1 laid on the road surface 53 by acting on the magnetic marker 1 with a magnetic field so that the magnetic marker 1 has magnetic polarity. The magnetizing apparatus 45 includes a magnetic field generating unit including a combination of a cylindrical coil 451 acquired by winding an electric wire and an iron core 452 made of a ferromagnetic material inserted and placed inside the coil 451, a power supply unit (omitted in the drawing) which controls energization with respect to the coil 451, and so forth.

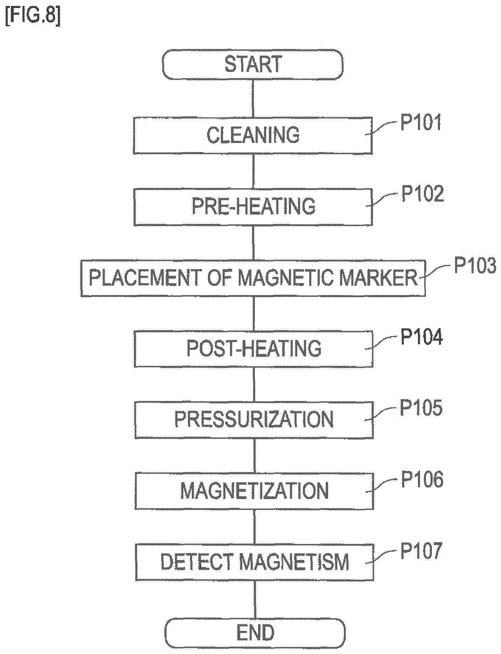

A method (FIG. 8) of installing the magnetic marker 1 by the work vehicle system 4S by combining the above-described four work vehicles 4A to 4D is described. In this installing method, the following processes are performed in the order of: a cleaning process P101 of cleaning the road surface 53, a first heating process P102 of heating the road surface 53 in advance, a placing process P103 of placing the magnetic marker 1 on the road surface 53, a second heating process P104 of heating the road surface 53 having the magnetic marker 1 placed thereon, a pressurizing process P105 of pressurizing the road surface 53 having the magnetic marker 1 placed thereon, a magnetizing process P106 of magnetizing the magnetic marker 1 placed on the road surface 53 by acting on the magnetic marker 1 with a magnetic field, and a detecting process P107 of detecting magnetism generated from the magnetic marker 1. Note that each of the work vehicles 4A to 4D specifies the laying position of the magnetic marker 1 by using the absolute position measured by the GPS positioning unit.

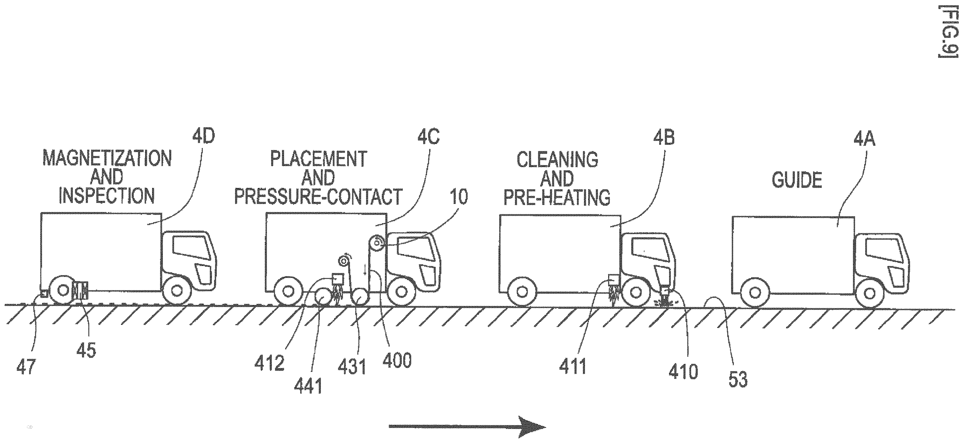

The installing method of FIG. 8 can be performed by causing three work vehicles 4B to 4D to follow and travel by the guide of the leading work vehicle 4A automatically travelling along the laying line 530L (refer to FIG. 2) (FIG. 9). The second work vehicle 4B performs the cleaning process P101 and the first heating process P102, the third work vehicle 4C performs the placing process P103, the second heating process P104, and the pressurizing process P105, and the fourth work vehicle 4D performs the magnetizing process P106 and the detecting process P107.

The above-described cleaning process P101 is a process of removing dirt and soil on the road surface 53 and cleaning the laying position of the magnetic marker 1 by inj ecting a high-pressure water stream from the injection nozzle (cleaning apparatus 410) included in the second work vehicle 4B.

The first heating process P102 is a pre-heating process of heating, in advance, the road surface 53 corresponding to the laying position of the magnetic marker 1 by the burner of the heating apparatus 411 of the work vehicle 4B. This process is performed when the laying position of the magnetic marker 1 becomes included in a range to be heated by the heating apparatus 411 when the work vehicle 4B moves along the lane. According to this first heating process P102, asphalt, which is a material for pavement to form the road surface 53 can be heated and softened by flames thrown by the burner.

The placing process P103 is a process of transferring and placing, on the road surface 53, the magnetic marker 1 retained on the carrier sheet 400 rolled out from the roll body 10. Rolling out of the carrier sheet 400 from the roll body 10 is performed by following the rotation of driving wheels of the work vehicle 4C via a decelerating mechanism not depicted. The degree of deceleration by the decelerating mechanism is adjusted, for each arrival of the laying position of the magnetic marker 1, so that the magnetic marker 1 retained on the carrier sheet 400 is positioned in a gap between the pressure roller 431 and the road surface 53. The magnetic marker 1 positioned in the gap between the pressure roller 431 and the road surface 53 is pressed by the pressure roller 431 onto the road surface 53 for pressure-bonding.

As described above, on the carrier sheet 400, the magnetic markers 1 are retained with the nonskid layer 15 (FIG. 4) on the inside (on the sheet side) and the joint layer 16 on the outside. If the carrier sheet 400 is pressurized from the back side, the magnetic marker 1 can be placed in a state in which the joint layer 16 is pressed onto the road surface 53. When the magnetic marker 1 is placed, the road surface 53 is heated and in a high-temperature state. Thus, asphalt forming the joint layer 16 is warmed up to be softened, and becomes integrated with asphalt on the road surface 53 side. This makes asphalt function as a bonding material, allowing the magnetic marker 1 to be bonded.

In the second heating process P104, the process is a post-heating process of heating the magnetic marker 1 placed on the road surface 53 together with the surrounding road surface 53. According to this heating process P104, together with asphalt of the surrounding road surface 53, asphalt of the nonskid layer 15 (FIG. 4) forming the surface of the magnetic marker 1 can be heated to be softened.

The pressurizing process P105 is a process of pressurizing after heating the magnetic marker 1 and its surroundings. If this process analogous to a process of paving the road surface 53 of the road is performed, the road surface 53 having the magnetic marker 1 laid thereon can be levelled off with high uniformity. Also, asphalt of the nonskid layer 15 on the surface side of the magnetic marker 1 and the surrounding asphalt can be nearly integrated to eliminate their boundary.

The magnetizing process P106 is a process of magnetizing the laid magnetic marker 1 by acting on the magnetic marker 1 with a magnetic field.

The detecting process P107 is a process of detecting magnetism generated from the magnetic marker 1 to perform an inspection as to whether a desired magnetic characteristic has been achieved by magnetization. If passing the inspection by this detecting process P107, laying of the magnetic marker 1 is completed.

As described above, according to the work vehicle system 4S, by causing platooning of four work vehicles 4A to 4D, work of laying the magnetic markers 1 can be efficiently performed. With replacement of the structure of the subsequent work vehicle, for example, check work for laid magnetic markers, re-magnetizing work, and so forth can also be performed.

In the present example, asphalt forming the joint layer 16 of the magnetic marker 1 is used as a bonding material. In place of this, a bonding material such as, for example, epoxy resin or silicone resin, may be used to bond the magnetic marker. In this case, in place of the second work vehicle 4B including the heating apparatus, it is preferable to combine a work vehicle including a coating apparatus which coats the road surface with the bonding material.

While the work vehicle 4A including the automatic travelling apparatus 48A is exemplarily described as a leading work vehicle, in place of this, a work vehicle having the work apparatus such as the cleaning apparatus 410 and the heating apparatus 411 in addition to the automatic travelling apparatus 48A may be taken as a leading work vehicle.

The configuration has been exemplarily described in which the absolute position is measured by the GPS measurement unit for automatic travelling along the laying line 530L which consists of points each at a known absolute position. In place of this, the leading work vehicle may include a camera which takes an image of a forward road and a structure of recognizing a lane by performing image processing on the taken image to detect a lane mark such as a white line. If the lane can be recognized by detecting left and right lane marks, which are partitioning lines of a lane, its center line can be specified as a laying line. This can specify the relative position of the laying line with respect to the work vehicle and, for example, automatic steering control with the relative position of the laying line 20 meters ahead as a control target can be performed. The lane mark such as a white line can be detected by using an image feature of the white line in which, in an image with edge components highlighted by applying, for example, a differential filter, a combination of an up-edge (a boundary of switching from darkness of the road surface to brightness of the white line) and a down-edge (a boundary of switching from brightness to darkness) occurs on both sides in a horizontal direction.

Note that when the white coating of the lane mark contains a reflector such as mica, the lane mark can be detected by using a radar apparatus by using millimeter waves or laser light, or the like.

Furthermore, a seal, marker, or the like may be attached at the laying position of the magnetic marker, and it is preferable to recognize the laying positions by detecting the seal or the like in the image taken by the camera. It is possible to cause the work vehicle to perform automatic travelling while sequentially recognizing the laying positions.

To perform the work relating to the laid magnetic marker, the work vehicles may be caused to perform platooning so as to move along the magnetic markers. For the automatic travelling apparatus of the leading work vehicle, if the laid magnetic markers are detected to measure a horizontal shift of the work vehicle with respect to the magnetic markers and perform automatic steering control based on this horizontal shift, platooning to move along the magnetic markers can be achieved.

The present example is an example of adopting the automatic steering apparatus 485 as a unit for achieving control of the steering angle of the steering wheel. As means for achieving control of the steering angle of the steering wheel, an apparatus which presents the control target acquired by the target acquisition apparatus 481 to the driver or the like can also be adopted. For example, if an apparatus which displays the control target on a screen is present, with the driver of the work vehicle operating the steering wheel as checking the control target, the above-described travelling of the work vehicle along the laying line can be achieved.

The work vehicle system 4S may be applied to work of re-magnetizing the magnetic marker 1 with its magnetism attenuated by changes over time after laying, the action of an external magnetic field, and so forth. In this case, platooning by automatic travelling is preferably performed as moving along the magnetic markers 1, with a work vehicle having mounted thereon a highly-sensitive magnetic sensor capable of detecting attenuated magnetism being taken as the lead.

According to the fourth work vehicle 4D, re-magnetization for changing the magnetic polarity of the magnetized magnetic marker 1 can be performed. Since this fourth work vehicle 4D includes the detecting apparatus 47, it is possible to check the magnetic polarity of the re-magnetized magnetic marker, check magnetic characteristics, and so forth together.

An intervehicle communication apparatus may be mounted on each work vehicle to transmit travelling control information such as the steering angle of the leading work vehicle to the subsequent work vehicle. If intervehicle communication is enabled, the laying positions of the magnetic markers can also be transmitted to the subsequent work vehicle.

While installation in which the magnetic markers 1 are continuously placed along the lane is exemplarily described in the present example, for example, in order to make a notification about information indicating the approach of a branch, intersection, or the like, the magnetic marker 1 may be placed before the branch or the like.

In the present example, the sheet-shaped magnetic marker 1 is exemplarily described as a magnetic marker. The shape of the magnetic marker may be a columnar shape having a circular cross section, a polygonal cross section, or the like. As a combination of a height and an outer diameter of the columnar-shaped magnetic marker, the shape may be a long and narrow columnar shape having a height dimension larger than its outer diameter, or may be a short columnar shape having an outer diameter dimension larger than its height. For example, the shape may be a columnar shape having a height of 10 mm and a diameter of 30 mm.

Methods of fabricating a columnar-shaped magnetic marker include, for example, a method of fabrication by molding the above-described slurry into a predetermined shape or the like, the slurry with magnetic powder blended in asphalt in a molten state, and a method of fabrication by forming a predetermined shape and then processing into a predetermined length.

For example, in the case of a columnar-shaped magnetic marker having a height of 10 mm and a diameter of 30 mm, as with the case of the present example, a carrier sheet retaining these magnetic markers may be rolled to a roll body, and stored and transported as the roll body. Furthermore, these magnetic markers may be placed in a plurality of rows on a broad carrier sheet and the sheet may be rolled into a roll shape.

Furthermore, a retaining member such as a tray or plate where the plurality of magnetic markers are two-dimensionally placed may be adopted, and the magnetic markers are stored or transported in a state of being retained on the retaining member. As for handling of the magnetic markers retained on the retaining member, a pick and place mechanism is effective which can advance and recede, for example, in a left-and-right direction and a vertical direction, and includes a suction head which can suction the magnetic marker by negative pressure. The structure is preferably adopted in which the suction head suctions and receives the magnetic markers one by one from the retaining member and sequentially places them on the road. Note that application of the pick and place mechanism is effective also for a carrier sheet having the magnetic markers placed in a plurality of rows.

To lay columnar-shaped magnetic markers, accommodation spaces, such as indentations or holes, for accommodating the magnetic markers are preferably formed in advance in the road. For example, as for the work vehicle 4B exemplarily depicted in FIG. 7, an apparatus for forming the above-described accommodation spaces is preferably provided in place of the heading apparatus 411 or at a position on a rear side (receding side) of this heating apparatus 411. For example, in the case of a short columnar-shaped magnetic marker having a height of 10 mm and a diameter of 30 mm, a tool such as a punch may be pressed to make a dent in the road surface to form the above-described accommodation space. Alternatively, a hole process may be performed with a tool such as a drill to form the above-described accommodation space on the road surface.

The pressure roller 431 of the work vehicle 4C may be a roller which transfers the magnetic markers 1 to the accommodation spaces without pressurization. The apparatus for forming the above-described accommodation spaces may be provided to the work vehicle 4C in place of the work vehicle 4B. When provided to the work vehicle 4C, the apparatus for forming the accommodation spaces is preferably placed on a front side (advancing side) ahead of the pressure roller 431.

As for the above-described accommodation space, a large dimension in a depth direction is preferably ensured with respect to the height of the magnetic marker. In this case, while an upper end face of the magnetic marker placed in the accommodation space is lower than the road surface, it is preferably sealed by being filled with, for example, a methacrylic-resin-based filler, to enhance uniformity with the surrounding road surface. Note that asphalt may be adopted as a filler. As for the work vehicle, an apparatus which supplies the filler to the road surface side is preferably provided.

Furthermore, in filling with the filler, a woven fabric or nonwoven fabric of glass fiber, carbon fiber, cellulose nanofiber, or the like may also be placed on the upper end face side of the magnetic marker. In this case, the woven fabric or nonwoven fabric is impregnated with the filler, thereby allowing the characteristics of the filler to be enhanced. As for the size of the woven fabric or nonwoven fabric, the size may be smaller than the shape of the cross section of the accommodation space, but may be next larger than the shape of the cross section of the accommodation space. If the woven fabric or the like is larger than the shape of the cross section of the accommodation space, the magnetic marker together with the road surface surrounding the accommodation space can be integrally covered. In this case, an opening portion of the accommodation space can be protected integrally with the surrounding road surface. For example, a depression or the like of the opening portion of the accommodation space can be reduced, and a favorable laid state of the magnetic markers in road operation over a long period of time can be maintained for a long time.

In the present example, the MI sensor is exemplarily described as the magnetic sensor 2 which detects the magnetic marker 1. In place of this, a high-sensitivity sensor adopting another principle may be combined, for example, a fluxgate sensor or TMR sensor.

The fluxgate sensor is a highly-sensitive magnetic sensor which measures magnetic intensity from a saturation timing by using the fact that the saturation timing of a core flux changes in accordance with the external magnetic field when a periodic current flows through a soft magnetic core. Note that as for the fluxgate sensor, many applications have been filed and detailed descriptions are in, for example, International Publication WO2011/155527 and Japanese Unexamined Patent Application Publication No. 2012-154786.

The TMR (Tunneling Magneto Resistive) sensor is a highly-sensitive sensor with a structure in which an insulator layer having a film thickness on the order of 1 nm is interposed between ferromagnetic layers. The TMR sensor achieves high sensitivity by using the tunneling magneto resistive (TMR) effect, in which the electric resistance of the insulator layer significantly changes in accordance with the external magnetic field when a voltage applied vertically with respect to the film surface produces a tunnel effect that permits a current flow through the insulator layer. Note that as for the TMR sensor, many applications have been filed and detailed descriptions are in, for example, International Publication WO2009/078296 and Japanese Unexamined Patent Application Publication No. 2013-242299.

While the specific examples of the present invention have been described above in detail as in the above embodiments, these specific examples merely describe examples of technologies included in the claims. Needless to say, the claims should not be restrictively construed by the structures, numerical values, and so forth of the specific examples. The claims include technologies obtained by variously modifying, changing, and combining the specific examples as appropriate by using known technologies, knowledge by people skilled in the art, and so forth.

### Reference Signs List

- 1: magnetic marker
- 10: roll body
- 4: work vehicle
- 4S: work vehicle system
- 411, 412: heating apparatus
- 42: supply apparatus
- 43: placing apparatus
- 45: magnetizing apparatus
- 47: detecting apparatus
- 48A: automatic travelling apparatus
- 48B: following travelling apparatus
- 481: target acquisition apparatus
- 483: radar measurement apparatus
- 485: automatic steering apparatus
- 486: vehicle speed control apparatus (speed control apparatus)
- 5: vehicle
- 53: road surface
- 530: lane
- 530L: laying line

## Claims

1. A work vehicle system configured of one or plurality of work vehicles performing work relating to magnetic markers to be laid on a road surface so as to be detectable by a magnetic sensor attached to a bottom surface side of a vehicle in order to achieve vehicle-side control for assisting driving operation of the vehicle by a driver or automatic driving not relying on operation of the driver, comprising:
a target acquisition apparatus which acquires a control target for travelling along a laying line, which is a virtual line where the magnetic markers are to be laid in a line or a virtual line where the magnetic markers have been laid in a line;
a unit for achieving control of a steering angle of a steering wheel based on the control target; and
a work apparatus which takes charge of the work relating to the magnetic markers.

2. The work vehicle system according to claim 1, comprising, as a unit for achieving control of the steering angle of the steering wheel, an automatic steering apparatus to achieve automatic steering by controlling the steering angle of the steering wheel based on the control target.

3. The work vehicle system according to claim 1 or 2, comprising a speed control apparatus which controls a travelling speed including driveaway and stop.

4. The work vehicle system according to any one of claims 1 to 3, comprising a laying position detection apparatus for detecting whether the work vehicle has reached a laying position, which is a position where the magnetic marker is planned to be laid or a position where the magnetic marker has been laid, and the work apparatus is configured to perform the work relating the magnetic markers when it is detected by the laying position detection apparatus that the work vehicle has reached the laying position.

5. The work vehicle system according to any one of claims 1 to 4, wherein the target acquisition apparatus includes a measuring unit which receives radio waves transmitted from a plurality of satellites and measures an absolute position of the work vehicle and a storage unit which stores an absolute position of the laying line, and generates and acquires the control target by comparing the absolute position of the work vehicle and the absolute position of the laying line.

6. The work vehicle system according to any one of claims 1 to 5, wherein the target acquisition apparatus recognizes a lane, which is a section on a road where the vehicle travels, and thereby measures a relative position of the laying line extending along the lane and, based on the relative position, generates and acquires the control target.

7. The work vehicle system according to any one of claims 1 to 6, the work vehicle system performing the work relating to the magnetic markers with a plurality of work vehicles travelling in a line, wherein a leading work vehicle includes the target acquisition apparatus, and
a subsequent work vehicle includes a following travelling apparatus which travels to follow a preceding work vehicle and a work apparatus which takes charge of a different work for each of the work vehicles.

8. A magnetic marker work method of performing, by a plurality of work vehicles, work relating to magnetic markers to be laid on a road surface so as to be detectable by a magnetic sensor attached to a bottom surface side of a vehicle in order to achieve vehicle-side control for assisting driving by a driver, wherein
to a leading work vehicle including a target acquisition apparatus which acquires a control target for travelling along a laying line, which is a virtual line where the magnetic markers are laid in a line or a virtual line where the magnetic markers have been laid in a line, and a unit for achieving control of a steering angle of a steering wheel based on the control target,
a subsequent work vehicle including a following travelling apparatus for travelling to follow a preceding work vehicle and a work apparatus which takes charge of the work relating to the magnetic markers is combined to configure the plurality of work vehicles, and the work relating to the magnetic markers are performed by platooning of the plurality of work vehicles, and
from among the work vehicles of a plurality of types with different types of the work apparatuses, the subsequent work vehicle is selected in accordance with work details to be performed.

9. The magnetic marker work method according to claim 8, wherein the leading work vehicle includes, as a unit for achieving control of the steering angle of the steering wheel, an automatic steering apparatus to achieve automatic steering by controlling the steering angle of the steering wheel based on the control target.
